# FASCICULE DE BREVET EUROPEEN

(11) **EP 3 298 686 B1**
(45) Date de publication et mention de la délivrance du brevet: **11.11.2020**
(21) Numéro de dépôt: 16726912.5
(22) Date de dépôt: 21.04.2016
(51) Int. Cl.: H02P 3/12, H02P 3/22, B60L 7/02

(54) **SYSTÈME ET PROCÉD'E DE DISSIPATION DE L'ÉNERGIE ÉLECTRIQUE RÉGÉNERÉE PAR DES ACTIONNEURS**
SYSTEM UND VERFAHREN ZUR ABLEITUNG VON DURCH AKTUATOREN REGENERIERTER ELEKTRISCHER ENERGIE
SYSTEM AND METHOD FOR DISSIPATING ELECTRIC ENERGY REGENERATED BY ACTUATORS

(30) Priorité: 23.04.2015 FR 1553650
(43) Date de publication de la demande: 28.03.2018
(73) Titulaire: Safran Electrical & Power, 31702 Blagnac Cedex (FR)
(72) Inventeur: CARTAILLER, Laurent, 91300 Massy (FR); MICHAUD, Benoit, 77670 Vernou La Celle Sur Seine (FR)
(74) Mandataire: Cabinet Camus Lebkiri
(86) Numéro de dépôt international: PCT/FR2016/050936
(87) Numéro de publication internationale: WO 2016/193559

(56) Documents cités:
- EP-A2- 1 674 326
- EP-A2- 1 944 779
- JP-A- H0 199 483
- JP-A- S60 197 179
- US-A1- 2013 215 658

## Description

### DOMAINE TECHNIQUE

La présente invention concerne un système et un procédé destinés à dissiper l'énergie électrique régénérée par des actionneurs électriques d'un aéronef.

### ETAT DE LA TECHNIQUE ANTERIEUR

Comme décrit dans le préambule de la demande FR2967847, les actionneurs électriques d'un aéronef peuvent fonctionner selon deux modes :
- Un mode moteur dans lequel une alimentation électrique de l'aéronef leur fournit de l'énergie. Cette alimentation électrique doit généralement être continue. Pour ce faire, les aéronefs comportent généralement une alimentation électrique alternative et un redresseur qui permet de convertir le courant de tension alternative fourni par l'alimentation électrique de l'avion en courant de tension continue; Ce redresseur peut également être situé dans l'actionneur lui-même ;
- Un mode générateur dans lequel les actionneurs électriques produisent de l'énergie. Cette énergie est généralement appelée « énergie électrique régénérée ». De l'énergie électrique régénérée est par exemple produite lors des manœuvres en vol de l'avion pendant lesquels les actionneurs de commandes de vol peuvent renvoyer de l'énergie.

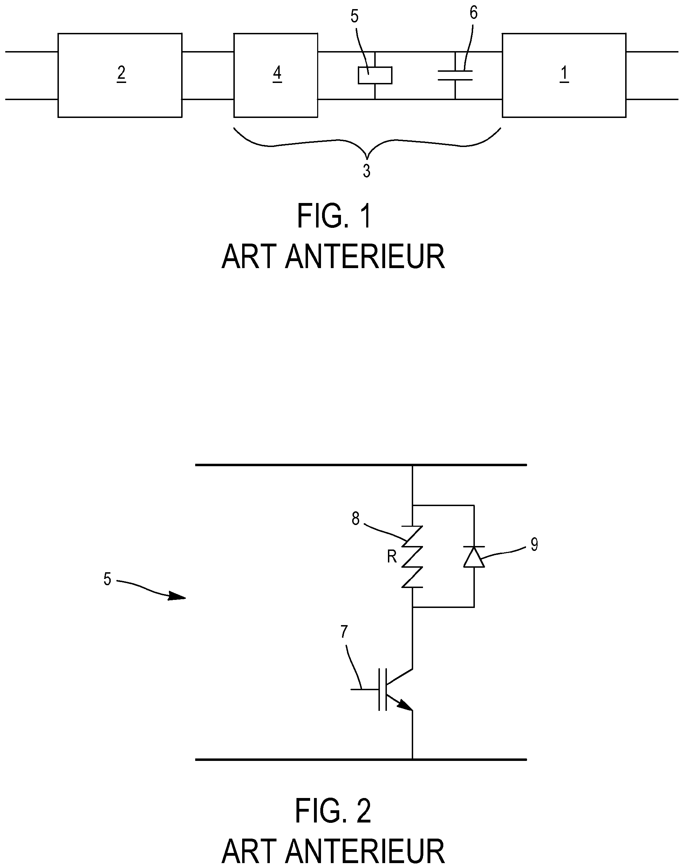

Toutefois, sur les réseaux électriques des aéronefs actuels, cette énergie électrique régénérée ne peut pas être renvoyée vers l'alimentation électrique de l'avion. Par conséquent, dans l'art antérieur, comme représenté schématiquement sur la figure 1, chaque actionneur 1 est relié à l'alimentation électrique 2 de l'avion par l'intermédiaire d'un convertisseur électrique 3 comportant :
- un redresseur 4 permettant de convertir le courant de tension alternative fourni par l'alimentation électrique de l'avion en courant de tension continue ;
- un système de dissipation 5 de l'énergie régénérée ;
- une capacité 6.

Un système de dissipation 5 de l'énergie régénérée de l'art antérieur est représenté plus précisément sur la figure 2. Il comporte :
- une résistance 8 permettant de dissiper par effet joule l'énergie électrique régénérée produite par l'actionneur électrique 1 ;
- un interrupteur commandable 7 relié en série avec la résistance 8;
- une diode en roue libre 9 qui permet d'éviter les surtensions aux bornes de la résistance 8 lorsque l'on ouvre l'interrupteur 7.

Un tel système de dissipation d'énergie est contrôlé grâce à son interrupteur 7. Celui-ci peut être commandé par un signal à modulation de largeur d'impulsion dont le rapport cyclique est régulé de façon à contrôler la quantité d'énergie dissipée dans la résistance. En effet, lorsque la quantité d'énergie électrique régénérée produite par l'actionneur électrique augmente, on augmente le rapport cyclique du signal de commande appliqué à l'interrupteur. Au contraire, lorsque la quantité d'énergie électrique régénérée produite par l'actionneur électrique diminue, on diminue le rapport cyclique du signal de commande appliqué à l'interrupteur. D'autres méthodes de contrôle, tel que le contrôle de la tension par seuils (comparateur à hystérésis) peuvent être utilisées.

Un tel système de dissipation d'énergie est efficace. Toutefois, le fait d'avoir autant de systèmes de dissipation d'énergie que d'actionneurs électriques augmente la masse et le cout du système implanté dans l'aéronef.

Il serait donc avantageux de raccorder tous les actionneurs électriques à un même système de dissipation. Toutefois, en cas de panne du système de dissipation, l'énergie électrique régénérée produite par un des actionneurs électriques ne serait plus dissipée, de sorte qu'elle pourrait détériorer voir détruire les autres actionneurs et/ou l'alimentation électrique de l'avion, détérioration liée à l'augmentation de la tension continue aux bornes des capacités de découplage.

Or, on constate que les systèmes de dissipation d'énergie de l'art antérieur n'ont pas la disponibilité pour dissiper l'énergie électrique régénérée de plusieurs actionneurs électriques.

Le document EP 1674362 décrit par ailleurs un système pour dissiper la puissance de freinage de rampes à courant continu d'un système de commande à courant alternatif. Ce système comporte deux bras de commutation reliés entre eux en parallèle.

Le document JP S60 197179 décrit par ailleurs un système pour empêcher un élément de commutation de brûler en contrôlant la tension aux bornes de l'élément et en détectant qu'il s'agit d'un état régénératif anormal lorsque la tension se maintient dans un état bas pendant une durée prescrite.

Et le document EP 1944779 décrit un démarreur de moteur comportant un circuit de commutation qui comporte un interrupteur, une résistance et une capacité connectés en parallèle.

### EXPOSE DE L'INVENTION

L'invention vise à remédier aux inconvénients de l'état de la technique en proposant un système de dissipation de l'énergie régénérée par au moins un actionneur d'un aéronef suivant la revendication 1 qui soit plus disponible que ceux de l'art antérieur.

Pour ce faire, est proposé selon un premier aspect de l'invention, un système de dissipation de l'énergie électrique régénérée produite par un actionneur électrique (1) d'un aéronef, le système de dissipation comportant :
- une résistance;
- deux bras de commutation, chaque bras de commutation étant relié en série avec la résistance, les deux bras de commutation étant reliés entre eux en parallèle, chaque bras de commutation comportant deux interrupteurs reliés entre eux en série, chaque interrupteur comportant deux bornes et une grille de commande, chaque interrupteur étant apte à être commandé en contrôlant
- le potentiel appliqué sur sa grille de commande;
- des moyens de mesure aptes à mesurer la tension aux bornes de chaque interrupteur.

Le système de dissipation d'énergie est particulièrement avantageux car on a constaté que dans les systèmes de dissipation d'énergie de l'art antérieur, le composant qui tombait le plus souvent en panne était l'interrupteur. Le système de dissipation d'énergie selon l'invention permet de remédier aux inconvénients de l'état de la technique en mesurant la tension aux bornes de chaque interrupteur, ce qui permet de savoir à tout instant si chaque interrupteur est fonctionnel ou non. En effet, lorsqu'un interrupteur fonctionne correctement et qu'il est fermé, la tension à ses bornes doit être inférieure à une tension seuil. De la même façon, lorsqu'un interrupteur fonctionne correctement et qu'il est ouvert, la tension à ses bornes doit être supérieure à la tension seuil. En mesurant la tension aux bornes de chaque interrupteur et en la comparant avec une tension seuil, on peut donc savoir à tout instant si ledit interrupteur est fonctionnel ou non. Si on détecte qu'un interrupteur ne fonctionne plus, on peut alors ouvrir l'autre interrupteur appartenant au même bras que l'interrupteur défaillant et fonctionner uniquement avec l'autre bras. Le système de dissipation d'énergie selon l'invention présente donc une disponibilité plus importante que ceux de l'art antérieur.

Le système de dissipation d'énergie selon le premier aspect de l'invention peut également présenter une ou plusieurs des caractéristiques ci-après prises indépendamment ou selon toutes les combinaisons techniquement possibles.

Avantageusement, le système de dissipation comporte en outre un circuit d'équilibrage monté en parallèle de chaque interrupteur, chaque circuit d'équilibrage comportant une résistance, dite « résistance d'équilibrage », et une capacité, dite « capacité d'équilibrage ». Les circuits d'équilibrage monté en parallèle de chaque interrupteur permettent de maitriser le potentiel au niveau du point milieu situé entre les deux interrupteurs d'un même bras, notamment lorsque les interrupteurs sont ouverts. En effet, en l'absence de ces circuits d'équilibrage, lors de la commutation de chaque interrupteur d'une position fermée à une position ouverte, le potentiel entre les deux interrupteurs d'un même bras ne serait pas maitrisé de sorte que la tension mesurée aux bornes de chaque interrupteur ne serait pas fiable. Les circuits d'équilibrage permettent de répartir la tension entre les deux interrupteurs d'un même bras de façon à ce que la tension mesurée aux bornes de chaque interrupteur soit plus fiable. En outre, ces circuits d'équilibrage permettent de se passer de la diode en roue libre qui est montée en parallèle de la résistance de dissipation des systèmes de dissipation de l'art antérieur puisqu'ils permettent, comme cette diode, d'éviter les surtensions aux bornes des interrupteurs lors de l'ouverture des interrupteurs.

La valeur de la résistance d'équilibrage et de la capacité d'équilibrage sont de préférence choisies de façon à ce que:
- la constante de temps RC du circuit d'équilibrage soit suffisante pour compenser les dispersions des temps de commutations des interrupteurs et ainsi garantir une détection fiable de l'état ouvert ou fermé de l'interrupteur ;
- la constante de temps RC du circuit d'équilibrage soit compatible avec les temps de commutations des interrupteurs, qui peuvent être paramétrés à l'aide des résistances de grille du driver ;
- la capacité d'équilibrage soit suffisamment forte pour récupérer tout ou partie de l'énergie stockée dans l'inductance formée par la résistance de dissipation et son câblage ;
- la capacité d'équilibrage soit suffisamment faible pour ne pas stockée trop d'énergie qui sera dissipée au moment de la fermeture de l'interrupteur ;
- la valeur de la résistance d'équilibrage soit suffisamment faible pour ne pas créer de surtension au blocage de l'interrupteur liée au courant circulant dans la résistance de dissipation ;
- la puissance de la résistance d'équilibrage soit compatible avec l'énergie stockée dans la capacité d'équilibrage.

Avantageusement, le système de dissipation comporte en outre un circuit de compensation monté en parallèle de chaque interrupteur, chaque circuit de compensation comportant une résistance, dite « résistance de compensation ». Cette résistance de compensation permet de compenser les courants de fuite de l'interrupteur quand il est ouvert, ce qui permet également d'équilibrer la répartition de la tension entre les deux interrupteurs d'un même bras lorsqu'ils sont ouverts.

La valeur de la résistance de compensation est de préférence strictement inférieure à l'impédance de l'interrupteur aux bornes duquel elle est reliée lorsque que l'interrupteur est ouvert.

Plus précisément, la valeur de la résistance de compensation est de préférence sensiblement égale à la valeur divisée par dix de l'impédance de l'interrupteur aux bornes duquel elle est reliée lorsque que l'interrupteur est ouvert.

Selon différents modes de réalisation, chaque interrupteur peut être :
- un transistor bipolaire à grille isolée, également appelé IGBT pour « Insulated Gate Bipolar Transistor »;
- un transistor à effet de champ à grille isolée, également appelé MOSFET pour « Metal Oxide Semiconductor Field Effect Transistor » ;
- un thyristor commuté à grille intégrée, également appelé IGCT pour "Integrated Gate-Commutated Thyristor » ;
- un thyristor à extinction par la gâchette, également appelé GTO pour « Gate Turn-Off Thyristor » ;
- un transistor bipolaire ;
- un transistor SiC JFET normally off.

Un deuxième aspect de l'invention concerne un convertisseur électrique pour alimenter au moins un actionneur électrique d'un aéronef à partir d'une alimentation électrique alternative, le convertisseur comportant :
- un redresseur ;
- un système de dissipation selon le premier aspect de l'invention, le système de dissipation étant monté en parallèle du redresseur ;
- une capacité montée en parallèle du système de dissipation.

Ce convertisseur est avantageux car il permet d'alimenter simultanément plusieurs actionneurs électriques.

Un troisième aspect de l'invention concerne un procédé de dissipation d'énergie tel que défini par la revendication 6. En effet, le fait de faire fonctionner alternativement les deux bras permet de tester en permanence tous les interrupteurs. En outre, cela permet de solliciter de manière équilibrée tous les interrupteurs.

Avantageusement, chaque interrupteur est commandé par un signal de modulation à largeur d'impulsion, dit « signal normal », les signaux normaux commandant les deux bras étant déphasés l'un par rapport à l'autre de façon à ce qu'un bras soit fermé tandis que l'autre bras est ouvert. On peut ainsi réguler la quantité d'énergie régénérée dissipée dans la résistance de dissipation en répartissant la commande sur les deux bras.

Avantageusement, à chaque fois qu'un interrupteur est fermé, le procédé comporte les étapes suivantes :
- mesure de la tension aux bornes dudit interrupteur ;
- comparaison de la tension mesurée avec une tension seuil.

Ces étapes permettent de tester qu'un interrupteur est fonctionnel à chaque fois qu'il passe en position fermée.

Dans ce cas, si la tension mesurée aux bornes d'un interrupteur, dit « interrupteur défaillant », est supérieure à la tension seuil, le procédé comporte de préférence les étapes suivantes :
- maintien dans une position ouverte de l'interrupteur appartenant au même bras que l'interrupteur défaillant;
- commande des interrupteurs appartenant à l'autre bras par un signal de modulation à largeur d'impulsion, dit « signal en cas de panne », présentant une fréquence deux fois supérieure à la fréquence du signal normal.

Ainsi, si on détecte qu'un interrupteur est défaillant, on condamne le bras auquel il appartient et on n'utilise plus que l'autre bras

Avantageusement, à chaque fois qu'un interrupteur est ouvert, le procédé comporte les étapes suivantes :
- mesure de la tension aux bornes dudit interrupteur ;
- comparaison de la tension mesurée avec une tension seuil.

Ces étapes permettent de tester qu'un interrupteur est fonctionnel à chaque fois qu'il passe en position ouverte.

Dans ce cas, si la tension mesurée aux bornes d'un interrupteur, dit « interrupteur défaillant », est inférieure à la tension seuil, le procédé comporte de préférence les étapes suivantes :
- maintien dans une position ouverte de l'interrupteur appartenant au même bras que l'interrupteur défaillant;
- commande des interrupteurs appartenant à l'autre bras par un signal de modulation à largeur d'impulsion, dit « signal en cas de panne », présentant une fréquence deux fois supérieure à la fréquence du signal normal.
C'est particulièrement avantageux lorsqu'un interrupteur est en court circuit puisqu'on peut alors ouvrir le bras auquel il appartient à l'aide de l'autre interrupteur du même bras et continuer à fonctionner normalement grâce à l'autre bras.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une représentation schématique d'un actionneur électrique de l'art antérieur raccordé à une alimentation électrique d'un aéronef ;
- La figure 2, une représentation schématique d'un système de dissipation d'énergie de l'art antérieur ;
- La figure 3, une représentation schématique d'un système de dissipation d'énergie selon un mode de réalisation de l'invention ;
- La figure 4, une représentation schématique de signaux de commande du système de la figure 3 ;
- La figure 5, une représentation schématique des moyens de commande du système de dissipation d'énergie de la figure 3 ;
- La figure 6, une représentation schématique d'un convertisseur électrique selon un mode de réalisation de l'invention.
- La figure 7, une représentation schématique d'un convertisseur électrique selon un autre mode de réalisation de l'invention.

Pour plus de clarté, les éléments identiques ou similaires sont repérés par des signes de références identiques sur l'ensemble des figures.

### DESCRIPTION DETAILLEE D'AU MOINS UN MODE DE REALISATION

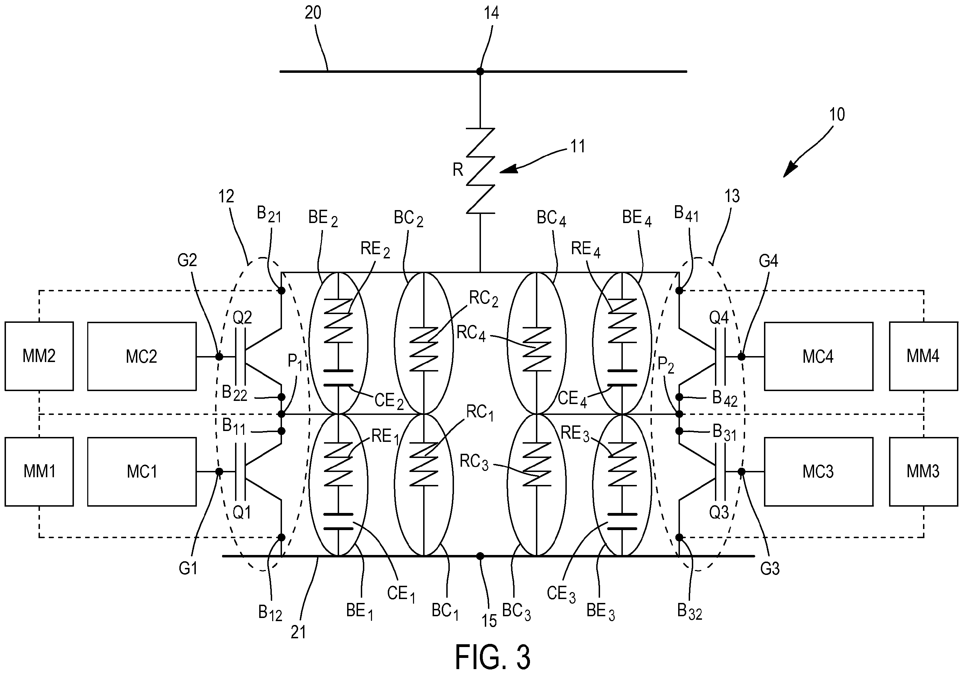

La figure 3 représente un système de dissipation d'énergie 10 selon un mode de réalisation de l'invention.

Ce système de dissipation d'énergie comporte une résistance R, dite « résistance de dissipation ». La résistance de dissipation R est apte à dissiper de l'énergie par effet Joule. Le système de dissipation d'énergie comporte également deux bras, dits « bras de commutation » 12 et 13. Chaque bras de commutation 12, 13 est relié en série avec la résistance de dissipation R. Les deux bras de commutation 12, 13 sont reliés en parallèle entre eux.

Chaque bras de commutation 12, 13 comporte deux interrupteurs Q1, Q2 et Q3, Q4 reliés entre eux en série. Chaque interrupteur comporte deux bornes B₁₁, B₁₂, B₂₁, B₂₂, B₃₁, B₃₂, B₄₁, B₄₂. Chaque interrupteur comporte une grille de commande G1, G2, G3, G4. Entre deux interrupteurs Q1, Q2 et Q3, Q4 d'un même bras se trouve un point dit « point milieu » P1, P2.

Chaque interrupteur est commandable. En effet, chaque interrupteur Q1, Q2, Q3, Q4 peut être fermé ou ouvert. Pour cela, le potentiel appliqué sur la grille de commande de chaque interrupteur peut être choisi en fonction de l'état dans lequel on veut placer l'interrupteur.

Chaque interrupteur Q1, Q2, Q3, Q4 peut par exemple être :
- un transistor à effet de champ à grille isolée, également appelé MOSFET pour « Metal Oxide Semiconductor Field Effect Transistor » ;
- un thyristor commute à grille integer, également appelé IGCT pour "Integrated Gate-Commutated Thyristor » ;
- un thyristor à extinction par la gâchette, également appelé GTO pour « Gate Turn-Off Thyristor » ;
- un transistor bipolaire
- un transistor SiC JFET Normally off.

Selon un mode de réalisation préférentiel, chaque interrupteur Q1, Q2, Q3, Q4 est un transistor bipolaire à grille isolée, également appelé IGBT pour « Insulated Gate Bipolar Transistor ».

Le système de dissipation d'énergie comporte également des moyens de commande MC1, MC2, MC3, MC4 de chaque interrupteur. Ces moyens de commande MC1, MC2, MC3, MC4 permettent d'appliquer un signal de commande de tension contrôlée sur la grille de commande G1, G2, G3, G4 de chaque interrupteur de façon à contrôler l'ouverture et la fermeture dudit interrupteur.

Le système de dissipation d'énergie comporte également des moyens de mesure MM1, MM2, MM3, MM4 configurés pour mesurer la tension aux bornes B₁₁, B₁₂, B₂₁, B₂₂, B₃₁, B₃₂, B₄₁, B₄₂ de chaque interrupteur Q1, Q2, Q3, Q4. En effet, le fait de mesurer la tension aux bornes de chaque interrupteur permet de savoir si cet interrupteur est fonctionnel ou non. En effet, lorsqu'un interrupteur est fonctionnel et qu'il est ouvert, la tension à ses bornes doit être supérieure à une tension seuil. Au contraire, lorsqu'un interrupteur est fonctionnel et qu'il est fermé, la tension à ses bornes doit être inférieure à une tension seuil. Par conséquent, en mesurant la tension aux bornes de chaque interrupteur, on peut savoir si ces interrupteurs sont fonctionnels ou non.

Le système de dissipation d'énergie comporte également des circuits dits « circuit d'équilibrage » BE1, BE2, BE3, BE4. Chaque circuit d'équilibrage BE1, BE2, BE3, BE4 est reliée en parallèle avec un des interrupteurs Q1, Q2, Q3, Q4. Chaque circuit d'équilibrage BE1, BE2, BE3, BE4 comporte une résistance, dite «résistance d'équilibrage » RE1, RE2, RE3, RE4 et une capacité, dite « capacité d'équilibrage, CE1, CE2, CE3, CE4. Ces circuits d'équilibrage permettent de répartir la tension entre les deux interrupteurs d'une même branche lorsque ces interrupteurs passent d'un état fermé à un état ouvert. Ces circuits d'équilibrage permettent donc de maitriser le potentiel du point milieu P1, P2 de chaque branche. Ces circuits d'équilibrage permettent également d'éviter les surtensions aux bornes des interrupteurs lors de l'ouverture des interrupteurs sans avoir à utiliser de diode de roue libre.

La valeur de chaque résistance d'équilibrage RE1, RE2, RE3, RE4 et la valeur de chaque capacité d'équilibrage CE1, CE2, CE3, CE4 sont de préférence choisies comme suit :
- la constante de temps RC du circuit d'équilibrage soit suffisante pour compenser les dispersions des temps de commutations des interrupteurs et ainsi garantir une détection fiable de l'état (ouvert / fermé) de l'interrupteur ;
- la constante de temps RC du circuit d'équilibrage soit compatible avec les temps de commutations des interrupteurs, qui peuvent être paramétrés à l'aide des résistances de Grille du driver ;
- la capacité d'équilibrage soit suffisamment forte pour récupérer tout ou partie de l'énergie stockée dans l'inductance formée par la résistance de dissipation et son câblage ;
- la capacité d'équilibrage soit suffisamment faible pour ne pas stockée trop d'énergie qui sera dissipée au moment de la fermeture de l'interrupteur ;
- la valeur de la résistance d'équilibrage soit suffisamment faible pour ne pas créer de surtension au blocage de l'interrupteur liée au courant circulant dans la résistance de dissipation ;
- la puissance de la résistance d'équilibrage soit compatible avec l'énergie stockée dans la capacité d'équilibrage.

Le système de dissipation d'énergie comporte également des circuits, dits « circuits de compensation » BC1, BC2, BC3, BC4. Chaque circuit de compensation BC1, BC2, BC3, BC4 est reliée en parallèle à un des interrupteurs Q1, Q2, Q3, Q4. Chaque circuit de compensation BC1, BC2, BC3, BC4 comporte une résistance, dite «résistance de compensation », RC1, RC2, RC3, RC4. Les résistances de compensation permettent d'équilibrer le système de dissipation d'énergie vis-à-vis des courants de fuite des interrupteurs lorsque ceux-ci sont ouverts.

La valeur de chaque résistance de compensation RC1, RC2, RC3, RC4 est strictement inférieure à la valeur de l'impédance de l'interrupteur Q1, Q2, Q3, Q4 auquel elle est reliée. La valeur de chaque résistance de compensation RC1, RC2, RC3, RC4 est de préférence égale à la valeur divisée par 10 de l'impédance de l'interrupteur Q1, Q2, Q3, Q4 auquel elle est reliée.

Les circuits d'équilibrage BE1, BE2, BE3, BE4 et les circuits de compensation BC1, BC2, BC3, BC4 permettent donc de maitriser le potentiel au point milieu P1, P2 de chaque bras, de façon à ce que la mesure de tension effectuée aux bornes de chaque interrupteur soit fiable et réellement représentative de l'état de chaque interrupteur.

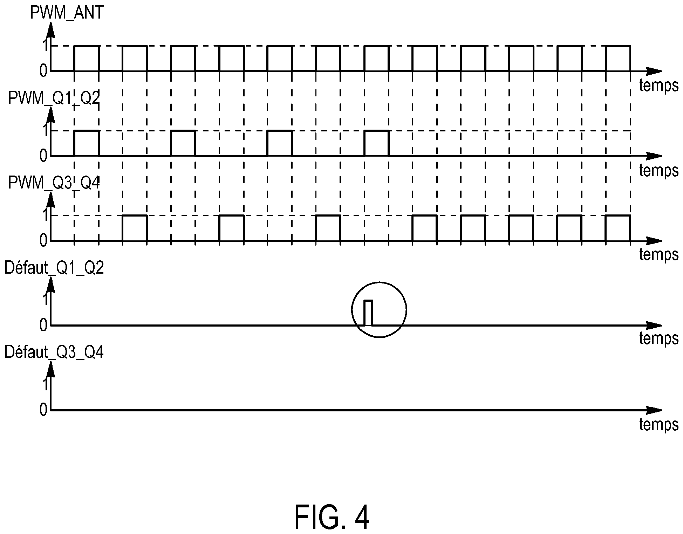

Un exemple de procédé de commande du système de dissipation d'énergie de la figure 3 va maintenant être détaillé en référence à la figure 4.

Le signal de commande peut être généré par un PWM comme représenté ci-après, mais il peut être également généré par d'autres systèmes de contrôle tel que la commande par hystérésis qui consiste à fermer l'interrupteur dès que la tension aux bornes du condensateur est supérieur à un seuil et d'ouvrir l'interrupteur dès que celle-ci est inférieure à un deuxième seuil plus faible que le premier.

Enfin, le signal peut également être généré par un OU logique entre les deux commandes, ce qui permet d'assurer une disponibilité de service encore plus grande.

La courbe PWM_ANT représente le signal de commande qui serait utilisé si le système de dissipation d'énergie comportait un seul interrupteur. Ce signal de commande PWM_ANT est un signal de modulation à largeur d'impulsion, également appelé PWM pour « pulse-width modulation ». Il présente de préférence une fréquence constante. La quantité d'énergie dissipée dans la résistance est contrôlée en contrôlant le rapport cyclique de ce signal PWM_ANT.

La courbe PWM_Q1-Q2 représente le signal de commande appliqué à chacun des interrupteurs Q1 et Q2 qui appartiennent au premier bras 12. La courbe PWM_Q3-Q4 représente le signal de commande appliqué à chacun des interrupteurs Q3 et Q4 qui appartiennent au deuxième bras 13. Le signal de commande appliqué à chaque interrupteur est un signal de modulation à largeur d'impulsion, également appelé PWM pour « pulse-width modulation ». Tant que les deux interrupteurs Q1, Q2 ou Q3, Q4 appartenant à un même bras sont fonctionnels, on applique de préférence le même signal de commande aux deux interrupteurs qui appartiennent à un même bras de façon à ce que les interrupteurs d'un même bras soient ouverts en même temps et fermés en même temps. Par contre, le signal de commande PWM_Q1-Q2 appliqué aux interrupteurs Q1, Q2 du premier bras 12 est actif en alternance par rapport au signal de commande PWM_Q3-Q4 appliqué aux interrupteurs Q3, Q4 du deuxième bras 13. En outre, comme on peut le voir sur la figure 4, le signal de commande PWM_Q1-Q2 et PWM_Q3-Q4 appliqué à chacun d'un bras présente un rapport cyclique deux fois plus faible que le signal de commande PWM_ANT qu'on utiliserait si le système de dissipation d'énergie ne comportait qu'un seul bras. En effet, les deux bras sont utilisés en alternance tant que tous les interrupteurs sont fonctionnels. Cette utilisation en alternance des deux bras permet de vérifier en permanence que tous les interrupteurs sont fonctionnels.

Pour cela, le procédé comporte également une étape de mesure de la tension aux bornes de chaque interrupteur à chaque fois que ledit interrupteur est fermé. Le procédé comporte ensuite une étape de comparaison de la tension mesurée avec une tension seuil. Tant que la tension mesurée reste inférieure à la tension seuil, l'interrupteur aux bornes duquel la tension a été mesurée est considéré comme fonctionnel. Par contre si on détecte que la tension mesurée aux bornes d'un interrupteur est supérieure à la tension seuil, cet interrupteur est considéré comme défaillant.

A titre d'exemple, on peut par exemple supposer que Q1 est considéré comme défaillant.

Le procédé comporte alors une étape d'ouverture de l'autre interrupteur appartenant au même bras que l'interrupteur considéré comme défaillant, dans cet exemple Q2, de façon à neutraliser le bras qui comporte un interrupteur défaillant.

Dans la suite du procédé de commande, seul l'autre bras, dans notre exemple, le deuxième bras 13, est utilisé. Par conséquent, le signal de commande PWM_Q3-Q4 appliqué au deuxième bras présente un rapport cyclique égal à deux fois le rapport cyclique qui était appliqué à chacun des bras avant la défaillance de l'interrupteur du fait du doublement de la fréquence d'activation du bras.

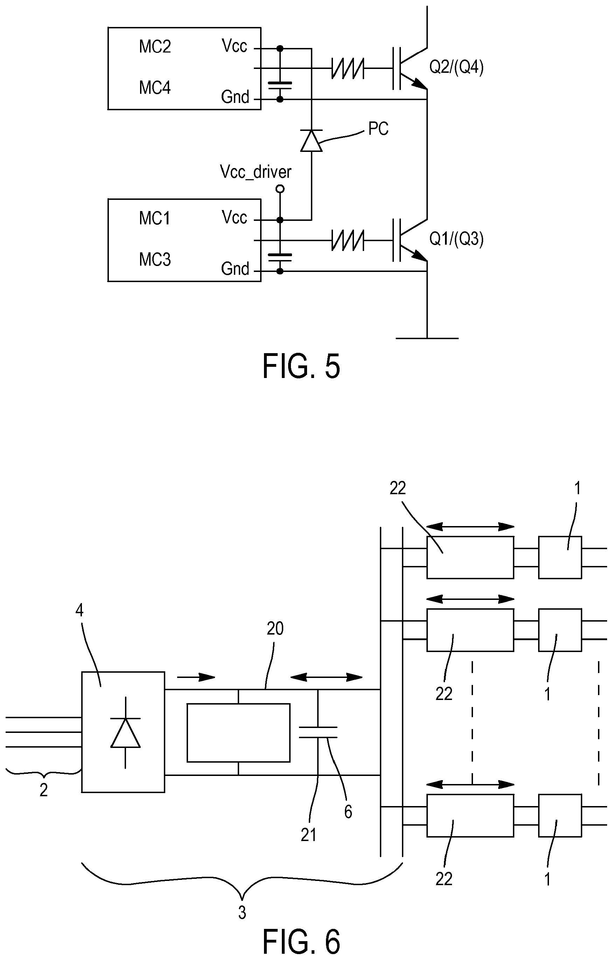

La figure 5 représente un exemple d'un des moyens de commande pouvant être utilisés pour commander les interrupteurs. Comme représenté sur cette figure, une seule alimentation Vcc_driver peut être utilisée pour émettre les signaux de commande PWM_Q1-Q2 et PWM_Q3-Q4 permettant de commander les quatre interrupteurs. Pour cela, les commandes des interrupteurs Q2 et Q4 des deux bras peuvent être alimentées par des pompes de charges avec l'alimentation des drivers des interrupteurs Q1 et Q3 des deux bras référencées au Bus HVDC.

La figure 6 représente un convertisseur électrique selon un mode de réalisation de l'invention. Ce convertisseur électrique permet de connecter une alimentation électrique 2 d'un aéronef à au moins deux actionneurs électriques 1. Pour ce faire, le convertisseur électrique comporte un redresseur 4 permettant de convertir le courant de tension alternative produit par l'alimentation électrique 2 de l'avion en courant de tension continue. Le convertisseur comporte donc un premier et un deuxième bus 20, 21 en sortie du redresseur 4, les deux bus 20, 21 permettant de faire transiter le courant en sortie du redresseur vers les actionneurs électriques 1.

Le convertisseur électrique comporte également un système de dissipation d'énergie 10 tel que celui décrit en référence à la figure 3. Ce système de dissipation d'énergie comporte une première borne 14 reliée au premier bus 20 et une deuxième borne 15 reliée au deuxième bus 21. Le convertisseur électrique comporte également une capacité 6 reliée en parallèle du système de dissipation d'énergie et du redresseur. Le convertisseur électrique est ensuite relié aux actionneurs électriques 1 via des dispositifs de protection 22 permettant de protéger ces actionneurs électriques.

Naturellement, l'invention n'est pas limitée aux modes de réalisation décrits en référence aux figures et des variantes pourraient être envisagées sans sortir du cadre de l'invention.

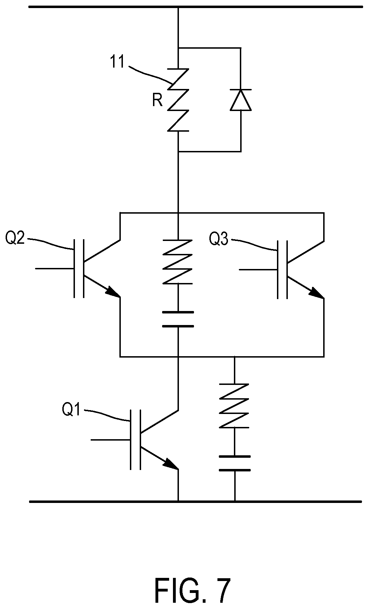

Ainsi, la figure 7 représente un autre mode de réalisation dans lequel le convertisseur comporte une résistance R 11 et trois interrupteurs Q1, Q2, Q3. Les deux interrupteurs Q2 et Q3 sont reliés en parallèle l'un de l'autre. L'interrupteur Q1 est relié en série avec les deux interrupteurs Q2 et Q3. Un circuit RC est relié en parallèle des interrupteurs Q2 et Q3. Un circuit RC est relié en parallèle de l'interrupteur Q1.

En fonctionnement normal, l'interrupteur Q1 est toujours fermé pour limiter ses contraintes, en tension et en température, et augmenter sa durée de vie. Les interrupteurs Q2 et Q3 commutent alternativement comme décrit en référence aux figures 3 et 4.

En cas de détection d'une défaillance d'un interrupteur Q2 ou Q3, l'autre interrupteur en parallèle avec l'interrupteur défaillant, est placé en position fermé et seul l'interrupteur Q1 est commandé.

## Revendications

1. Système de dissipation (10) de l'énergie électrique régénérée produite par un actionneur électrique (1) d'un aéronef, le système de dissipation (10) comportant :
- une résistance (R) ; et
- deux bras de commutation (12, 13),
- chaque bras de commutation (12, 13) étant relié en série avec la résistance (R), les deux bras de commutation (12, 13) étant reliés entre eux en parallèle, **caractérisé en ce que** chaque bras de commutation (12, 13) comporte deux interrupteurs (Q1, Q2, Q3, Q4) reliés entre eux en série, chaque interrupteur (Q1, Q2, Q3, Q4) comportant deux bornes (B₁₁, B₁₂, B₂₁, B₂₂, B₃₁, B₃₂, B₄₁, B₄₂) et une grille de commande (G1, G2, G3, G4), chaque interrupteur (Q1, Q2, Q3, Q4) étant apte à être commandé en contrôlant le potentiel appliqué sur sa grille de commande (G1, G2, G3, G4);
et **en ce que** le système de dissipation comprend des moyens de mesure (MM1, MM2, MM3, MM4) aptes à mesurer la tension aux bornes (B₁₁, B₁₂, B₂₁, B₂₂, B₃₁, B₃₂, B₄₁, B₄₂) de chaque interrupteur (Q1, Q2, Q3, Q4).

2. Système de dissipation (10) selon la revendication précédente, comportant en outre un circuit d'équilibrage (BE1, BE2, BE3, BE4) monté en parallèle de chaque interrupteur (Q1, Q2, Q3, Q4), chaque circuit d'équilibrage (BE1, BE2, BE3, BE4) comportant une résistance (RE1, RE2, RE3, RE4), dite « résistance d'équilibrage, et une capacité (CE1, CE2, CE3, CE4), dite « capacité d'équilibrage ».

3. Système de dissipation (10) selon l'une des revendications précédentes, comportant en outre un circuit de compensation (BC1, BC2, BC3, BC4) monté en parallèle de chaque interrupteur (Q1, Q2, Q3, Q4), chaque circuit de compensation (BC1, BC2, BC3, BC4) comportant une résistance (RC1, RC2, RC3, RC4), dite « résistance de compensation ».

4. Système de dissipation (10) selon l'une des revendications précédentes, dans lequel chaque interrupteur (Q1, Q2, Q3, Q4) est un transistor bipolaire à grille isolée.

5. Convertisseur électrique pour alimenter au moins un actionneur électrique d'un aéronef à partir d'une alimentation électrique alternative, le convertisseur comportant :
- un redresseur (4) ;
- un système de dissipation (10) selon l'une des revendications précédentes, le système de dissipation (10) étant monté en parallèle du redresseur (4);
- une capacité (6) montée en parallèle du système de dissipation (10).

6. Procédé de dissipation d'énergie,
mis en œuvre dans un système de dissipation (10) de l'énergie électrique régénérée produite par un actionneur électrique (1) d'un aéronef, le système de dissipation (10) comportant une résistance (R) et deux bras de commutation (12, 13), les deux bras de commutation (12, 13) étant reliés entre eux en parallèle, **caractérisé en ce que** chaque bras de commutation (12, 13) comporte deux interrupteurs (Q1, Q2, Q3, Q4) reliés entre eux en série, chaque interrupteur (Q1, Q2, Q3, Q4) comportant deux bornes (B₁₁, B₁₂, B₂₁, B₂₂, B₃₁, B₃₂, B₄₁, B₄₂) et une grille de commande (G1, G2, G3, G4),
- la tension aux bornes (B₁₁, B₁₂, B₂₁, B₂₂, B₃₁, B₃₂, B₄₁, B₄₂) de chaque interrupteur (Q1, Q2, Q3, Q4) est mesurée avec des moyens de mesure (MM1, MM2, MM3, MM4), et **en ce que**
- les deux interrupteurs (Q1 /Q2, Q3/Q4) d'un même bras sont commandés de façon à être ouverts simultanément et fermés simultanément, chaque interrupteur (Q1, Q2, Q3, Q4) étant commandé en contrôlant le potentiel appliqué sur la grille de commande (G1, G2, G3, G4) de l'interrupteur, les interrupteurs étant en outre commandés de façon à fermer alternativement les deux bras, chaque bras de commutation (12, 13) étant relié en série avec ladite résistance (R).

7. Procédé de dissipation d'énergie selon la revendication précédente, dans lequel, chaque interrupteur (Q1, Q2, Q3, Q4) est commandé par un signal de modulation à largeur d'impulsion, dit « signal normal », les signaux normaux commandant les deux bras étant déphasés l'un par rapport à l'autre de façon à ce qu'un bras soit fermé tandis que l'autre bras est ouvert.

8. Procédé selon la revendication précédente, dans lequel, à chaque fois qu'un interrupteur (Q1, Q2, Q3, Q4) est fermé, le procédé comporte les étapes suivantes :
- mesure de la tension aux bornes (B₁₁, B₁₂, B₂₁, B₂₂, B₃₁, B₃₂, B₄₁, B₄₂) dudit interrupteur (Q1, Q2, Q3, Q4);
- comparaison de la tension mesurée avec une tension seuil.

9. Procédé selon la revendication précédente, dans lequel, si la tension mesurée aux bornes (B₁₁, B₁₂, B₂₁, B₂₂, B₃₁, B₃₂, B₄₁, B₄₂) d'un interrupteur (Q1, Q2, Q3, Q4), dit « interrupteur défaillant », est supérieure à la tension seuil, le procédé comporte les étapes suivantes:
- maintien dans une position ouverte de l'interrupteur appartenant au même bras que l'interrupteur défaillant;
- commande des interrupteurs appartenant à l'autre bras par un signal de modulation à largeur d'impulsion, dit « signal en cas de panne », présentant une fréquence deux fois supérieure à la fréquence du signal normal.

## Patentansprüche

1. Ableitsystem (10) der regenerierten elektrischen Energie, die von einem elektrischen Steller (1) eines Luftfahrzeugs erzeugt wird, wobei das Ableitsystem (10) umfasst:
- einen Widerstand (R); und
- zwei Schaltarme (12, 13),
- wobei jeder Schaltarm (12, 13) in Serie mit dem Widerstand (R) verbunden ist, wobei die beiden Schaltarme (12, 13) miteinander parallel verbunden sind, **dadurch gekennzeichnet, dass** jeder Schaltarm (12, 13) zwei Schalter (Q1, Q2, Q3, Q4) umfasst, die miteinander in Serie verbunden sind, wobei jeder Schalter (Q1, Q2, Q3, Q4) zwei Anschlüsse (B₁₁, B₁₂, B₂₁, B₂₂, B₃₁, B₃₂, B₄₁, B₄₂) und ein Steuergitter (G1, G2, G3, G4) umfasst, wobei jeder Schalter (Q1, Q2, Q3, Q4) geeignet ist, unter Steuern des Potenzials, das auf das Steuergitter (G1, G2, G3, G4) angewendet ist, gesteuert zu sein;
und dass das Ableitsystem Messmittel (MM1, MM2, MM3, MM4) umfasst, die zum Messen der Spannung an den Anschlüssen (B₁₁, B₁₂, B₂₁, B₂₂, B₃₁, B₃₂, B₄₁, B₄₂) jedes Schalters (Q1, Q2, Q3, Q4) geeignet sind.

2. Ableitsystem (10) gemäß dem voranstehenden Anspruch, umfassend darüber hinaus eine Ausgleichsschaltung (BE1, BE2, BE3, BE4), die mit jedem Schalter (Q1, Q2, Q3, Q4) parallel geschaltet ist, wobei jede Ausgleichsschaltung (BE1, BE2, BE3, BE4) einen als "Ausgleichswiderstand" bezeichneten Widerstand (RE1, RE2, RE3, RE4) und eine als "Ausgleichskapazitanz" bezeichnete Kapazitanz (CE1, CE2, CE3, CE4) umfasst.

3. Ableitsystem (10) gemäß irgendeinem der voranstehenden Ansprüche, umfassend darüber hinaus eine Ausgleichsschaltung (BC1, BC2, BC3, BC4), die parallel zu jedem Schalter (Q1, Q2, Q3, Q4) montiert ist, wobei jede Ausgleichsschaltung (BC1, BC2, BC3, BC4) einen als "Ausgleichswiderstand" bezeichneten Widerstand (RC1, RC2, RC3, RC4) umfasst.

4. Ableitsystem (10) gemäß einem der voranstehenden Ansprüche, bei dem jeder Schalter (Q1, Q2, Q3, Q4) ein bipolarer Transistor mit isoliertem Gitter ist.

5. Stromumrichter zum Versorgen wenigstens eines elektrischen Stellers eines Luftfahrzeugs ausgehend von einer Wechselstrom-Versorgung, wobei der Umrichter umfasst:
- einen Gleichrichter (4);
- ein Ableitsystem (10) gemäß einem der voranstehenden Ansprüche, wobei das Ableitsystem (10) parallel zum Gleichrichter (4) montiert ist;
- eine Kapazitanz (6), die parallel zum Ableitsystem (10) montiert ist.

6. Energieableitverfahren, das in einem Ableitsystem (10) der regenerierten elektrischen Energie umgesetzt wird, die von einem elektrischen Steller (1) eines Luftfahrzeugs erzeugt wird, wobei das Ableitsystem (10) einen Widerstand (R) und zwei Schaltarme (12, 13) umfasst, wobei die zwei Schaltarme (12, 13) miteinander parallel verbunden sind, **dadurch gekennzeichnet, dass** jeder Schaltarm (12, 13) zwei miteinander in Serie verbundene Schalter (Q1, Q2, Q3, Q4) umfasst, wobei jeder Schalter (Q1, Q2, Q3, Q4) zwei Anschlüsse (B₁₁, B₁₂, B₂₁, B₂₂, B₃₁, B₃₂, B₄₁, B₄₂) und ein Steuergitter (G1, G2, G3, G4) umfasst,
- wobei die Spannung an den Anschlüssen (B₁₁, B₁₂, B₂₁, B₂₂, B₃₁, B₃₂, B₄₁, B₄₂) jedes Schalters (Q1, Q2, Q3, Q4) mit Messmitteln (MM1, MM2, MM3, MM4) gemessen wird und dadurch, dass
- die zwei Schalter (Q1/Q2, Q3/Q4) eines und desselben Arms derart geschaltet werden, dass sie gleichzeitig offen und gleichzeitig geschlossen sind, wobei jeder Schalter (Q1, Q2, Q3, Q4) unter Steuern des Potenzials, das auf das Steuergitter (G1, G2, G3, G4) des Schalters angewendet wird, gesteuert wird, wobei die Schalter darüber hinaus derart gesteuert werden, dass die zwei Arme alternativ geschlossen werden, wobei jeder Schaltarm (12, 13) in Serie mit dem genannten Widerstand (R) verbunden ist.

7. Energieableitverfahren gemäß dem voranstehenden Anspruch, bei dem jeder Schalter (Q1, Q2, Q3, Q4) von einem als "normales Signal" bezeichneten Modulationssignal mit Impulsbreite gesteuert wird, wobei die normalen Signale, die die zwei Arme steuern, jeweils zueinander derart phasenversetzt sind, dass ein Arm geschlossen ist, während der andere Arm offen ist.

8. Verfahren gemäß dem voranstehenden Anspruch, bei dem das Verfahren jedes Mal, wenn ein Schalter (Q1, Q2, Q3, Q4) geschlossen ist, die folgenden Schritte umfasst:
- Messung der Spannung an den Anschlüssen (B₁₁, B₁₂, B₂₁, B₂₂, B₃₁, B₃₂, B₄₁, B₄₂) des genannten Schalters (Q1, Q2, Q3, Q4);
- Vergleich der Spannung, die mit einer Schwellenspannung gemessen wird.

9. Verfahren gemäß dem voranstehenden Anspruch, bei dem das Verfahren, wenn die an den Anschlüssen (B₁₁, B₁₂, B₂₁, B₂₂, B₃₁, B₃₂, B₄₁, B₄₂) eines als "ausgefallener Schalter" bezeichneten Schalters (Q1, Q2, Q3, Q4) gemessene Spannung höher ist als die Schwellenspannung, die folgenden Schritte umfasst:
- Aufrechterhaltung in einer offenen Position des Schalters, der zu demselben Arm gehört wie der ausgefallene Schalter;
- Steuerung der Schalter, die zu dem anderen Arm gehören, durch ein als "Signal im Pannenfall" bezeichnetes Modulationssignal mit Impulsbreite, das eine zweimal höhere Frequenz aufweist als die Frequenz des normalen Signals.

## Claims

1. System for dissipating (10) regenerated electric energy produced by an electric actuator (1) of an aircraft, the dissipating system (10) comprising:
- a resistor (R);
- two switching arms (12, 13), each switching arm (12, 13) being connected in series with the resistor (R), the two switching arms (12, 13) being connected together in parallel,
**characterized in that** each switching arm (12, 13) comprises two switches (Q1, Q2, Q3, Q4) connected to one another in series, each switch (Q1, Q2, Q3, Q4) comprising two terminals (B₁₁, B₁₂, B₂₁, B₂₂, B₃₁, B₃₂, B₄₁, B₄₂) and a control grid (G1, G2, G3, G4), each switch (Q1, Q2, Q3, Q4) being suitable for being controlled by controlling the potential applied to its control grid (G1, G2, G3, G4) thereof; the system for dissipating comprising measurement means (MM1, MM2, MM3, MM4) capable of measuring the voltage at the terminals (B₁₁, B₁₂, B₂₁, B₂₂, B₃₁, B₃₂, B₄₁, B₄₂) of each switch (Q1, Q2, Q3, Q4).

2. Dissipating system (10) according to the preceding claim, further comprising a balancing circuit (BE1, BE2, BE3, BE4) mounted in parallel with each switch (Q1, Q2, Q3, Q4), each balancing circuit (BE1, BE2, BE3, BE4) comprising a resistor (RE1, RE2, RE3, RE4), called "balancing resistor", and a capacitance (CE1, CE2, CE3, CE4), called "balancing capacitance".

3. Dissipating system (10) according to one of the preceding claims, further comprising a compensation circuit (BC1, BC2, BC3, BC4) mounted in parallel with each switch (Q1, Q2, Q3, Q4), each compensation circuit (BC1, BC2, BC3, BC4) comprising a resistor (RC1, RC2, RC3, RC4), called "compensation resistor".

4. Dissipating system (10) according to one of the preceding claims, wherein each switch (Q1, Q2, Q3, Q4) is an insulated gate bipolar transistor.

5. Electric converter for supplying at least one electric actuator of an aircraft from an alternating electrical power supply, the converter comprising:
- a rectifier (4);
- a dissipating system (10) according to one of the preceding claims, the dissipating system (10) being mounted in parallel with the rectifier (4);
- a capacitance (6) mounted in parallel with the dissipating system (1 0).

6. Method for dissipating energy implemented in a system for dissipating (10) regenerated electric energy produced by an electric actuator (1) of an aircraft, the dissipating system (10) comprising a resistor (R) and two switching arms (12, 13), the two switching arms (12, 13) being connected together in parallel,
**characterized in that**, each switching arm (12, 13) comprising two switches (Q1, Q2, Q3, Q4) connected to one another in series, each switch (Q1, Q2, Q3, Q4) comprising two terminals (B₁₁, B₁₂, B₂₁, B₂₂, B₃₁, B₃₂, B₄₁, B₄₂) and a control grid (G1, G2, G3, G4),
- the voltage at the terminals (B₁₁, B₁₂, B₂₁, B₂₂, B₃₁, B₃₂, B₄₁, B₄₂) of each switch (Q1, Q2, Q3, Q4) is measured with measurement means (MM1, MM2, MM3, MM4),
- the two switches (Q1/Q2, Q3/Q4) of a same arm are controlled so as to be open simultaneously and closed simultaneously, each switch (Q1, Q2, Q3, Q4) being controlled by controlling the potential applied to the control grid (G1, G2, G3, G4) of the switch, the switches being further controlled so as to close the two arms alternately, each switching arm (12, 13) being connected in series with the resistor (R).

7. Energy dissipating method according to the preceding claim, wherein, each switch (Q1, Q2, Q3, Q4) is controlled by a pulse width modulation signal, called "normal signal", the normal signals controlling the two arms being dephased with respect to each other so that one arm is closed while the other arm is open.

8. Method according to the preceding claim, wherein, each time that a switch (Q1, Q2, Q3, Q4) is closed, the method comprises the following steps:
- measuring the voltage at the terminals (B₁₁, B₁₂, B₂₁, B₂₂, B₃₁, B₃₂, B₄₁, B₄₂) of said switch (Q1, Q2, Q3, Q4);
- comparing the measured voltage with a threshold voltage.

9. Method according to the preceding claim, wherein, if the voltage measured at the terminals (B₁₁, B₁₂, B₂₁, B₂₂, B₃₁, B₃₂, B₄₁, B₄₂) of a switch (Q1, Q2, Q3, Q4), called "faulty switch", is above the threshold voltage, the method comprises the following steps:
- maintaining the switch belonging to the same arm as the faulty switch in an open position;
- controlling the switches belonging to the other arm by a pulse width modulation signal, called "signal in case of failure", having a frequency two times higher than the frequency of the normal signal.
